Europäisches Patentamt

European Patent Office

Office européen des brevets

(11) Veröffentlichungsnummer: **0 537 638 B1**

# EUROPÄISCHE PATENTSCHRIFT

(45) Veröffentlichungstag der Patentschrift: **30.08.95**

(51) Int. Cl.⁶: **C08L 95/00**

(21) Anmeldenummer: **92117283.9**

(22) Anmeldetag: **09.10.92**

(54) **Polymermodifizierte Bitumen.**

(30) Priorität: **14.10.91 DE 4133979**

(43) Veröffentlichungstag der Anmeldung:
**21.04.93 Patentblatt  93/16**

(45) Bekanntmachung des Hinweises auf die
Patenterteilung:
**30.08.95 Patentblatt  95/35**

(84) Benannte Vertragsstaaten:
**AT BE CH DE DK ES FR GB GR IE IT LI LU MC
NL PT SE**

(56) Entgegenhaltungen:
**EP-A- 0 436 803
WO-A-87/06253
GB-A- 2 161 169**

**Week 9141, Derwent Publications Ltd., London, GB; AN 91-300294 & JP-A-3 200 806
(DAICEL CHEM IND) 2. September 1991**

(73) Patentinhaber: **VEBA OEL AG
Alexander-von-Humboldt-Strasse
D-45896 Gelsenkirchen (DE)**

(72) Erfinder: **Grundmann, Raban, Dr.
Ludwigshafener Strasse 6
W-4370 Marl (DE)**
Erfinder: **Höhr, Dieter, Dr.
Hubertusstrasse 8
W-4230 Wesel (DE)**
Erfinder: **Schulte, Hans-Werner, Dr.
Am Düngelbruch 48
W-4690 Herne 1 (DE)**
Erfinder: **Müller, Michael, Dr.
Mecklenbecker Strasse 177
W-4400 Münster (DE)**

(74) Vertreter: **Lindner, Wolfgang, Dr.
Alexander-von-Humboldt-Strasse
D-45896 Gelsenkirchen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind polymermodifizierte Bitumen bestehend aus Bitumen, funktionalisiertem Polyoctenamer und gegebenenfalls weiteren Polymeren, ein Verfahren zu ihrer Herstellung sowie ihre Verwendung. Die Stabilität der Mischungen kann durch Vernetzung mit mindestens difunktionellen Vernetzungsmitteln weiter verbessert werden.

Polymermodifizierte Bitumen werden in vielen Bereichen der Bauindustrie, speziell in Dachdichtungsmaterialien und im Straßenbau angewendet. Durch diese Modifizierung kann die Kälteflexibilität sowie die Standfestigkeit des bitumenhaltigen Materials verbessert werden. Die Verbesserung der elastischen Eigenschaften des Bitumens und des Haftvermögens am mineralischen Füllgut sind weitere Ziele, die durch das Zumischen von Polymeren erreicht werden sollen.

Ein spezielles Problem bei der Polymermodifizierung von Bitumen stellt die mangelnde Homogenität der Mischung bei Heißlagerung dar. Viele in Bitumen lösliche Polymere (z. B. ataktisches Polypropylen oder Polyisobutylen) neigen aufgrund ihrer niedrigen Dichte zur Abscheidung auf der Bitumenoberfläche. Die DE-OS 19 46 999 sowie die DE-OS 38 19 931 beschreiben die Lösung dieses Problems durch Behandlung der polymermodifizierten Bitumen mit Luftsauerstoff bei 200 - 250 °C. Diese Methode führt zu einer Veränderung der Polymere sowie des Bitumens, welches sich z. B. in einem Anstieg des Erweichungspunkt zeigt. Außerdem ist dieses Verfahren umständlich sowie energieintensiv und somit kostenungünstig.

Die US-4 818 367 beschreibt ein System zur Bitumenmodifizierung, das aus einem funktionalisierten Copolymeren und einem funktionalisierten Elastomeren besteht und das zur Polykondensation fähig ist. Bei beiden Komponenten werden die funktionellen Gruppen durch Copolymerisation in das Polymer eingebaut. Die elastomere Komponente in dieser Mischung weist ein Molekulargewicht bis maximal 9000 auf. Für eine wirksame Elastifizierung des Bitumens, die durch Viskositätsanstieg und gute Rückverformung gekennzeichnet ist, sind jedoch Elastomere mit wesentlich höheren Molgewichten erforderlich.

Die GB-A-2161169 beschreibt kristalline trans-Butadien-Polymere, die entweder Homopolymere des Butadiens oder Copolymere des Butadiens mit anderen konjugierten Dienen sein können und bestimmte strukturelle Parameter und physikalische Eigenschaften aufweisen. Diese Polymere sollen u. a. als Asphaltbindemittel einsetzbar sein. Mischungen der Polymeren mit anderen Polymeren, u. a. trans-Polyoctenamer, sind möglich.

Die JP-A-3200806 beschreibt epoxidierte cyclische Polyolefine mit einem Molekulargewicht von 30.000 und mehr, u. a. epoxidierte cyclische Polyoctenamere. Diese epoxidierten Polyolefine können zur Modifizierung der physikalischen Eigenschaffen anderer Polymeren zugefügt werden.

Die Aufgabe der vorliegenden Erfindung besteht darin, polymermodifizierte Bitumen bereitzustellen, die bei Heißlagerung und Verarbeitungstemperatur entmischungsstabil sind und gute elastische Eigenschaften z. B. nach einer thermischen Beanspruchung aufweisen. Des weiteren sollen diese polymermodifizierten Bitumen mit solchen Polymeren mischbar und mischungsstabil sein, die allein in Bitumen unverträglich sind.

Die Aufgabe wird durch die polymermodifizierten Bitumen gemäß den Ansprüchen gelöst.

Für die Herstellung der erfindungsgemäßen polymermodifizierten Bitumen ist Bitumen gemäß DIN 55 946, Teil 1, prinzipiell geeignet, sofern die Stabilität des kolloidalen Systems aus disperser Phase (Asphaltene) und kohärenter Phase (Maltene) durch Zugabe des Polymers nicht beeinträchtigt wird. Vorzugsweise werden Straßenbaubitumensorten gemäß DIN 1995, Teil 1, oder Bitumensorten mit ähnlichem Anforderungsprofil eingesetzt.

Die erfindungsgemäßen polymermodifizierten Bitumen können pro 100 Gewichtsteile Bitumen 0,5 - 10 Gewichtsteile an funktionalisiertem Polyoctenamer enthalten; vorzugsweise enthalten sie 1,5 - 5 Gewichtsteile an funktionalisiertem Polyoctenamer.

Polyoctenamere sind bekannt und werden nach bekannten Verfahren des Standes der Technik hergestellt (z. B. R. Streck, Chemiker Z. 99 (1975) S. 397 ff.; K. J. Ivin, Olefin Methatesis, Academic Press, New York, 1983, S. 190 ff.). Sie werden aus cyclischen Olefinen, die mindestens eine nicht substituierte Ringdoppelbindung aufweisen, mit Hilfe sogenannter Metathesekatalysatoren unter Öffnung des Ringes durch Polymerisation erhalten (DE-OSS 15 70 940, 16 45 038, 17 20 798, 17 70 143 und 18 05 158, DE-AS 12 99 868, GB-PSS 1 124 456, 1 194 013 und 1 182 975).

Im allgemeinen werden Polyoctenamere mit einer Molmasse ($M_w$ = Gewichtsmittel der Molmasse) bis zu 200 000, vorzugsweise zwischen 20 000 und 150 000, eingesetzt. Der trans-Gehalt liegt zwischen 50 und 90 %, bevorzugt zwischen 55 und 85 %.

Die Lösungsviskosität (J-Wert bestimmt in Toluol bei 25 °C und einer Konzentration von 0,005 $g/cm^3$ gemessen analog DIN 53 726) der einsetzbaren Polyoctenamere beträgt 80 bis 200 ml/g, vorzugsweise 100 bis 150 ml/g.

Die funktionalisierten Polyoctenamere können Epoxy- und/oder Carboxylgruppen sowie daraus abgeleitete Gruppen (z. B. Amide, Anhydride, Ester, Imide) aufweisen.

Die Einführung dieser funktionellen Gruppen erfolgt nach bekannten Verfahren des Standes der Technik (siehe z. B. EP-OSS 0 327 698, 0 436 803).

Epoxygruppen lassen sich beispielsweise durch partielle Epoxidierung der Doppelbindungen mit Persäuren einführen. Der Gehalt an Epoxidsauerstoff sollte bei 0,5 bis 9, vorzugsweise 3 bis 8, Gew.-% bezogen auf 100 Gewichtsteile Polyoctenamer liegen. Alternativ gelangt man durch Pfropfung mit beispielsweise Glycidylmethacrylat zu brauchbaren Epoxyderivaten.

Die Einführung von Carboxylgruppen bzw. daraus abgeleitete Gruppen erfolgt durch Pfropfung mit geeigneten ungesättigten Monomeren. Bei den Monomeren handelt es sich um $\alpha,\beta$-ungesättigte Mono- und Dicarbonsäuren, vorzugsweise mit drei bis 10 Kohlenstoffatomen, mit mindestens einer olefinischen Doppelbindung sowie daraus ableitbare mono- und difunktionelle Derivate, als auch cyclische Derivate, wie Amide, Anhydride, Ester, Imide, Nitrile und Thioderivate.

Beispiele solcher Carbonsäuren sind Acrylsäure, Citraconsäure, Crotonsäure, Fumarsäure, Itaconsäure, Maleinsäure, Methacrylsäure, Norbornendicarbonsäuren und analoge Verbindungen.

Weiterhin sind solche Monomere geeignet, die erst während der Reaktion durch Eliminierung eine Doppelbindung in $\beta$-Stellung zur bereits vorhandenen Carboxylgruppe oder daraus abgeleitete Gruppen bilden, wie zum Beispiel Asparaginsäure und deren Derivate.

Als Derivate der Carbonsäuren seien Acrylnitril, Fumarsäuredialkylester, Maleinsäureanhydrid und Itaconsäureanhydrid genannt. Besondes bevorzugt finden Maleinsäureanhydrid und Fumarsäuredialkylester mit ein bis vier Kohlenstoffatomen in der Alkylgruppe in den erfindungsgemäßen polymermodifizierten Bitumen Verwendung.

Die funktionellen Gruppen sind überwiegend in der $\alpha$-Stellung zu den Polymerdoppelbindungen an die Ketten gebunden.

Das funktionalisierte Polyoctenamer enthält 0,1 - 30 Gewichtsteile, vorzugsweise 0,3 - 10 Gewichtsteile, besonders bevorzugt bis zu 0,5 - 5 Gewichtsteile der Carbonsäure bzw. der Derivate bezogen auf 100 Gewichtsteile Polyoctenamer.

Die polymermodifizierten Bitumen können weiterhin Vernetzungsmittel enthalten.

Als Vernetzungsmittel geeignete Verbindungen sind solche, die funktionelle Gruppen besitzen und mit den funktionellen Gruppen des Polyoctenamers reagieren können, z. B. primäre und sekundäre Aminogruppen, Epoxygruppen, Hydroxylgruppen, Isocyanatgruppen. Besonders bevorzugt jedoch sind Verbindungen die über Hydroxyl- und/oder Aminogruppen verfügen.

Die für die Vernetzung der funktionalisierten Polyoctenamere einsetzbaren Hydroxylverbindungen, Amine oder Aminoalkohole weisen mindestens zwei, vorzugsweise 2 - 4 reaktionsfähige Gruppen im Molekül auf und haben relative Molmassen zwischen 60 und 10 000. Die Verwendung von Hydroxylverbindungen oder aminofunktionalisierten Polymeren mit wesentlich höheren Molmassen führt ebenfalls bei der Umsetzung mit funktionalisiertem Polyoctenamer zu Polymernetzwerken.

Als Beispiele für Hydroxylverbindungen seien genannt: Ethylenglykol, Butandiol, Dodecandiol, Triethylenglykol, Dimethylolcyclohexan, Neopentylglykol, Bisphenol A, hydroxymethyliertes Polybutadienöl, Resolharze.

Verwendbare Amine sind z. B. Ethylendiamin, Hexamethylendiamin, Dodecamethylendiamin, Isophorondiamin, Bisaminocyclohexan, Xylylendiamin sowie aminoterminierte Polyamide.

Als Aminoalkohole kommen z. B. Ethanolamin, Diethanolamin, Bis-(2-hydroxylpropyl)-amin in Betracht.

Die Vernetzungsreaktion läßt sich durch Katalysatoren beschleunigen, z. B. Schwefelsäure, Phosphorsäure, Toluolsulfonsäure, Paraffinsulfonsäure; organische Stickstoffbasen wie tert. Amine oder Alkylimidazole; Zinkacetat, Alkyltitanat.

Die Temperaturen für die Vernetzungsreaktion liegen zwischen 50 und 250 °C. Für die reaktiveren Aminoverbindungen liegt der bevorzugte Bereich bei 100 - 180 °C, bei den Hydroxylverbindungen bei 120 - 200 °C.

Zur Erzielung einer hohen Vernetzungsdichte werden stöchiometrische Mengen der Carboxylgruppen und der Hydroxyl- bzw. Aminogruppen verwendet, so daß z. B. ein Verhältnis von einer Carboxylgruppe zu einer Hydroxyl- oder Aminogruppe gute Ergebnisse liefert.

Insbesondere bei den mit Maleinsäureanhydrid funktionalisierten Polyoctenameren wird in der Regel bei der Vernetzungsreaktion nur eine der beiden Carboxylgruppen umgesetzt. Es ist häufig erwünscht einen niedrigen Vernetzungsgrad zu erzielen, so daß auch Zusammensetzungen aus 1 Mol Carboxylgruppen und 0,05 - 1 Mol, vorzugsweise 0,05 - 0,5, Hydroxyl- bzw. Aminogruppen im Rahmen der Erfindung liegen.

Die polymermodifizierten Bitumen werden bei 50 - 250 °C, vorzugsweise bei 100 - 200 °C hergestellt, wobei in der Regel das flüssige Bitumen vorgelegt und anschließend das funktionalisierte Polyoctenamer, optional weitere unten genannte polymere Zusätze, in Form von Krümeln, Granulaten, bitumen-, weichmacher- bzw. ölhaltigen Batchen oder als Lösung zugefügt wird. Gegebenenfalls können Füllstoffe oder sonstigen Additive ergänzt werden. Schließlich wird ein oder mehrere di- oder polyfunktionelle Vernetzungsmittel zudosiert und die Mischung bis zur beendeten Vergelung gerührt. Andere Reihenfolgen der Zugabe sind jedoch möglich.

Als Mischaggregate sind Rührkessel, Z-Kneter, Mischextruder geeignet. Durch die Verwendung von scherintensiven Mischwerkzeugen oder von hochtourigen Rührern kann die Mischzeit verkürzt und die Homogenisierung verbessert werden.

Eine bevorzugte Ausführung der Erfindung besteht in der Kombination der erfindungsgemäßen polymermodifizierten Bitumen mit Kautschuken wie z. B. Ethylen-α-olefin-Kautschuk (EP(D)M), wobei das α-Olefin 3 - 18 Kohlenstoffatome aufweisen kann, Styrolbutadien(-block-)polymerisat (SBR), Butadienkautschuk (BR), Naturkautschuk (NR), Polychloropren-(CR) oder Nitrilkautschuk (NBR). Bevorzugt sind jedoch EP(D)M-, SBR- und BR-Kautschuk, wobei dem EP(D)M-Kautschuk eine besondere Bedeutung zukommt. Obwohl viele der genannten Polymere mit Bitumen unverträglich sind, lassen sie sich in der Kombination mit dem vernetzten funktionalisierten Polyoctenamer zu entmischungsstabilen elastifizierten Bitumina verarbeiten. Diese Kautschuke können bezogen auf 100 Gewichtsteile Bitumen in Mengen von 0,1 - 10 Gewichtsteilen, insbesondere mit 0,5 - 3 Gewichtsteilen zugesetzt werden.

Den polymermodifizierten Bitumen der Erfindung können zusätzlich auch 1 - 30 Gewichtsteile Thermoplaste wie z. B. Polyethylen, Polypropylen, Polystyrol, Polyvinylchlorid oder thermoplastische Elastomere, bezogen auf 100 Gewichtsteile Bitumen, zugegeben werden.

Des weiteren können die polymermodifizierten Bitumen Füllstoff wie z. B. Ruße jeder Art, Kieselsäurederivate, Calciumcarbonat, Kaolin, Talkum, Gummimehl, Schlacken oder Flugaschen enthalten. Zusätzliche Additive in den bituminenhaltigen Mischungen können Weichmacher, Fluxöle, Stabilisatoren, Verarbeitungshilfsmittel und konventionelle Vernetzungsmittel sein. Der Anteil dieser Zusatzstoffe bezogen auf 100 Teile Bitumen ist abhängig von der Verwendung der polymermodifizierten Bitumen und variiert über einen Bereich von 0,1 bis 70 Gewichtsteile.

Des weiteren können die polymermodifizierten Bitumen zur Herstellung von Bitumenemulsionen dienen.

Die erfindungsgemäßen polymermodifizierten Bitumina zeichnen sich durch ein besonders gutes Haftvermögen am Füllgut aus. Schon mit einer relativ geringen Menge der Modifizierungskomponenten weisen die Mischungen bemerkenswerte gute Kälteflexibilität auf, was sich in einen sehr niedrigen Brechpunkt widerspiegelt. Ein weiterer Vorteil ist das hohe elastische Rückstellvermögen vor sowie nach thermischer Beanspruchung. Darüber hinaus ist die Homogenität nach Heißlagerung hervorzuheben.

Deshalb finden die polymermodifizierten Bitumina im Straßen- und Tiefbau Verwendung in Form von Heißbindemittel bzw. in Form von Bitumenemulsionen für Splitte, Kiese, Sande und Gesteinsmehl. Ein weiteres bevorzugtes Anwendungsgebiet sind bituminenhaltige Dachdichtungsmaterialien, speziell in Form von Bahnen oder Folien.

Die nachfolgenden Beispiele sollen die Erfindung näher erläutern.

Die folgenden Produkte werden verwendet:

EPDM: =  kristallines EPDM hoher Rohfestigkeit mit ML (1 + 4) 100 °C = 85, 70 % Ethylen- und 8 % Ethylidennorbornen-Gehalt

trans-Polyoctenamer (mit Mw = 100 000 und J = 120 ml/g, trans-Gehalt 80 %, VESTENAMER[R] der Fa. Hüls AG) mit 3,8 Gew. -% Maleinsäureanhydrid funktionalisiert

## Beispiele 1 - 3

In einem heizbaren Rührkessel mit Propellerrührer werden das Bitumen und das trans-Polyoctenamer-MSA-Addukt (3,8 Gewichtsteile MSA) bei 160 - 180 °C gemischt. Zur Homogenisierung kann ein Hochschermischer (Ultraturrax) eingesetzt werden (Tabelle 1, Beispiel 1 und 2). In der Regel genügt zur Homogenisierung ein Propellerrührer (Tabelle 1, Beispiel 3).

Die Prüfung der Mischungen erfolgte entsprechend den "Technischen Lieferbedingungen für polymermodifizierte Bitumen in Asphaltschichten im Heißeinbau" (Forschungsgesellschaft für Straßen- und Verkehrswesen, TL PmB 1989, Teil 1, Tabellen A und B).

Tabelle 1

| Beispiele | Prüfung nach DIN | 1 | 2 | 3 |
|---|---|---|---|---|
| Mischungen | | Gewichtsteile | | |
| Bitumen B 200 | | 97 | - | 96,5 |
| Bitumen B 80 | | - | 97 | - |
| Polyoctenamer-(3,8 %) MSA | | 3 | 3 | 3,5 |
| Eigenschaften | | | | |
| Nadelpenetration 0,1 mm (100 g, 5 s, 25 °C) | 52 010 | 163 | 86 | 149 |
| Erweichungspunkt in °C Ring und Kugel | 52 011 | 44,5 | 50,5 | 43,0 |
| Brechpunkt nach Fraaß in °C | 52 012 | -26 | -30 | -30 |
| Duktilität bei 7 °C in cm | | 125 | - | >150 |
| bei 13 °C in cm | 52 013 | - | 63 | |
| Dichte bei 25 °C in g/cm$^3$ | 52 004 | 1,002 | 1,005 | 1,002 |
| Flammpunkt in °C | ISO 2592 | >340 | >340 | 334 |
| Elastische Rückstellung in % | | 47,5 | 67,5 | 50 |
| Homogenität nach Heißlagerung, Differenz der Erweichungspunkte Ring und Kugel in °C | | 0,5 | 0,5 | 0 |
| Relativgewichtsänderung durch thermische Beanspruchung in % | 52 016 | -0,01 | +0,03 | +0,14 |

Tabelle 1 (Fortsetzung)

| | Beispiele | Prüfung nach DIN | 1 | 2 | 3 |
|---|---|---|---|---|---|
| Mischungen | | | Gewichtsteile | | |
| Bitumen B 200 | | | 97 | - | 96,5 |
| Bitumen B 80 | | | - | 97 | - |
| Polyoctenamer-(3,8 %) MSA | | | 3 | 3 | 3,5 |
| Eigenschaften | | Prüfung nach DIN | | | |
| Änderung des Erweichungspunktes Ring und Kugel durch thermische Beanspruchung in % | | 52 016 — 52 010 | 2,5 | 4,5 | 5 |
| Änderung der Nadelpenetration durch thermische Beanspruchung in % | | 52 016 52 010 | 27,6 | 32,6 | 31,5 |
| Duktilität nach thermischer Beanspruchung bei 7 °C in cm | | 52 016 | 50 | - | 7,5 |
| bei 13 °C in cm | | 52 013 | | 40 | |
| Elastische Rückstellung nach thermischer Beanspruchung in % | | 52 016 | 42,5 | 52,5 | 52,5 |

Beispiele 4 - 7 und Vergleichsbeispiel A

In einem heizbaren 2 l Metallgefäß mit Propellerrührer werden 1 l Bitumen B 200 auf 180 - 200 °C erwärmt. Man dosiert die Additive (s. Tabelle 2) in der Reihenfolge: EPDM, Maleinsäureanhydrid funktionalisiertes trans-Polyoctenamer und Vernetzungsmittel. Dabei wartet man nach jeder Zugabe die Homogenisierung der Mischung ab. Die Viskosität der Masse steigt nach Zugabe der Polymeren und des Vernetzungsmittels jeweils an. Das polymermodifizierte Bitumen wird 0,5 - 6 Stunden bis zur maximalen Vergelung nachgerührt. Der Gelgehalt der Prüfmischungen wird durch Lösen in Toluol bei 90 °C, Abfiltrieren und Auswiegen des getrockneten Rückstandes ermittelt. Beim Vergleichsbeispiel A wird nur EPDM zugegeben. Nähere Angaben zu den Prüfmethoden in den Beispielen 1 - 3.

Tabelle 2

| Beispiel | Vergleich A | 4 | 5 | 6 | 7 |
|---|---|---|---|---|---|
| | | (Gewichtsteile) | | | |
| Bitumen B 200 | 100 | 100 | 100 | 100 | 100 |
| EPDM | 5 | 2,5 | 1 | 1,5 | 1 |
| Polyoctenamer-(2 %) MSA | – | – | – | 2 | – |
| Polyoctenamer-(3,8 %) MSA | – | 2,5 | 3 | – | 2 |
| Dodecandiol | – | – | – | – | 0,08 |
| Hexamethylendiamin | – | – | – | 0,02 | – |
| Butandiol | – | 0,04 | 0,05 | – | – |
| Toluolsulfonsäure | – | 0,01 | 0,02 | – | 0,01 |
| Eigenschaften | | | | | |
| Entmischung nach Lagerung 72 Std./180 °C | ja | nein | nein | nein | nein |
| Erweichungspunkt Ring u. Kugel | 47 °C[*] | 82 | 61 | 66 | 58 |
| Gelgehalt in Toluol bei 90 °C | 0,3[*] % | 4,2 % | 4,9 % | 9,1 % | 3,5 % |

*) nach Entmischung, untere Phase

Die Mischung 1 des Vergleichsbeispiels A ist nach Temperaturlagerung nicht mehr homogen, Mischungen der Beispiele 4 - 7 zeigen keine Phasentrennung und erhöhte Erweichungspunkte. Das Diamin führt offensichtlich zu einer stärkeren Vergelung als die Dihydroxyverbindungen.

Außerdem wurden an den Mischungen nach Heißlagerung der Beispiele 4 und 5 folgende Werte gemessen:

| | Beispiel 4 | Beispiel 5 |
|---|---|---|
| Nadelpenetration bei 25 °C | 63 | 74 |
| Brechpunkt nach Fraaß | -22 °C | -24 °C |
| Duktilität bei 25 °C | 54 cm | 37 cm |
| Elastische Rückstellung | 85 % | 80 % |

**Patentansprüche**

1. Polymermodifizierte Bitumen, die 0,5 bis 10 Gewichtsteile funktionalisiertes Polyoctenamer auf 100 Gewichtsteile Bitumen und ggfs. Vernetzungsmittel enthalten.

2. Polymermodifizierte Bitumen gemäß Anspruch 1,
dadurch gekennzeichnet,
daß das Polyoctenamer überwiegend ein trans-Polyoctenamer ist und Carboxylgruppen sowie daraus abgeleitete Gruppen enthält.

3. Polymermodifizierte Bitumen gemäß den Ansprüchen 1 und 2,
dadurch gekennzeichnet,
daß die Funktionalisierung durch eine oder mehrere der folgenden Verbindungen oder deren Derivate erfolgt: Acrylsäure, Asparaginsäure, Citraconsäure, Crotonsäure, Fumarsäure, Itaconsäure, Maleinsäure, Methacrylsäure, Norbornendicarbonsäuren.

4. Polymermodifizierte Bitumen nach den Ansprüchen 1 bis 3,
dadurch gekennzeichnet,
daß die funktionellen Gruppen aus Maleinsäureanhydrid stammen.

5. Polymermodifizierte Biutmen nach den Ansprüchen 1 bis 3,
dadurch gekennzeichnet,
daß die funktionellen Gruppen aus Fumarsäuredialkylester mit 1 bis 4 Kohlenstoffatomen in der Alkylkette stammen.

6. Polymermodifizierte Bitumen nach Anspruch 1,
dadurch gekennzeichnet,
daß das funktionalisierte Polyoctenamer ein trans-Polyoctenamer ist und Epoxygruppen enthält.

7. Polymermodifizierte Bitumen gemäß den Ansprüchen 1 bis 6,
dadurch gekennzeichnet,
daß sie zusätzlich 0,1 - 10 Gewichtsteile eines weiteren Kautschuks, bezogen auf 100 Gewichtsteile Bitumen, enthalten.

8. Polymermodifizierte Bitumen gemäß den Ansprüchen 1 bis 7,
dadurch gekennzeichnet,
daß die zur Vernetzung verwendeten bi- oder polyfunktionellen Verbindungen Epoxy-, Isocyanat-, $NH_2$-, NHR-, OH-Gruppen enthalten.

9. Verfahren zur Herstellung von polymermodifizierten Bitumen nach den Ansprüchen 1 bis 8,
dadurch gekennzeichnet,
daß man zu 100 Gewichtsteilen Bitumen 0,5 bis 10 Gewichtsteile funktionalisiertes Polyoctenamer mischt.

10. Verfahren zur Herstellung von polymermodifizierten Bitumen gemäß Anspruch 9, dadurch gekennzeichnet,
daß man diese gegebenenfalls nach Zugabe von weiteren Elastomeren, Thermoplasten, Füllstoffen, Weichmachern, Stabilisatoren und Verarbeitungshilfsmittel mit 0,05 bis 1 Mol funktioneller Gruppen aus einer mindestens bifunktionellen reaktiven Verbindung, bezogen auf jeweils 1 Mol der reaktiven Gruppen im funktionalisierten Polyoctenamer, vernetzt.

11. Verfahren zur Herstellung von polymermodifizierten Bitumen gemäß den Ansprüchen 9 bis 10,
dadurch gekennzeichnet,
daß die zur Vernetzung verwendeten bi- oder polyfunktionellen Verbindungen Epoxy-, Isocyanat-, $NH_2$-, NHR-, OH-Gruppen enthalten.

12. Verfahren zur Herstellung von Bitumenemulsionen aus polymermodifizierten Bitumen gemäß den Ansprüchen 9 bis 11,

dadurch gekennzeichnet,
daß man Emulsionen mit einem Anteil an polymermodifiziertem Bitumen von 40 bis 80 Gewichtsteilen erzeugt.

13. Verwendung der polymermodifizierte Bitumen im Straßen- und Tiefbau sowie als Material für Dachdichtungen.

**Claims**

1. Polymer-modified bitumens which contain 0.5 to 10 parts by weight of functionalized polyoctenamer to 100 parts by weight of bitumen and, optionally, crosslinking agents.

2. Polymer-modified bitumens according to Claim 1, characterized in that the polyoctenamer is predominantly a trans-polyoctenamer and contains carboxyl groups, as well as groups derived therefrom.

3. Polymer-modified bitumens according to Claims 1 and 2, characterized in that the functionalization is carried out by means of one or more of the following compounds or their derivatives: acrylic acid, aspartic acid, citraconic acid, crotonic acid, fumaric acid, itaconic acid, maleic acid, methacrylic acid, norbornenedicarboxylic acids.

4. Polymer-modified bitumens according to Claims 1 to 3, characterized in that the functional groups originate from maleic anhydride.

5. Polymer-modified bitumens according to Claims 1 to 3, characterized in that the functional groups originate from dialkyl fumarates containing 1 to 4 carbon atoms in the alkyl chain.

6. Polymer-modified bitumens according to Claim 1, characterized in that the functionalized polyoctenamer is a trans-polyoctenamer and contains epoxy groups.

7. Polymer-modified bitumen according to Claims 1 to 6, characterized in that they additionally contain 0.1 - 10 parts by weight of a further rubber, referred to 100 parts by weight of bitumen.

8. Polymer-modified bitumen according to Claims 1 to 7, characterized in that the bifunctional or polyfunctional compounds used for the crosslinking contain epoxy, isocyanate, $NH_2$, NHR, OH groups.

9. Method of preparing polymer-modified bitumens according to Claims 1 to 8, characterized in that 0.5 to 10 parts by weight of functionalized polyoctenamer are mixed with 100 parts by weight of bitumen.

10. Method of preparing polymer-modified bitumens according to Claim 9, characterized in that they are crosslinked, optionally after adding further elastomers, thermoplastic materials, fillers, plasticizers, stabilizers and processing aids, with 0.05 to 1 mol of functional groups from an at least bifunctional reactive compound, referred in all cases to 1 mol of the reactive groups in the functionalized polyoctenamer.

11. Method of preparing polymer-modified bitumens according to Claims 9 to 10, characterized in that the bifunctional or polyfunctional compounds used for the crosslinking contain epoxy, isocyanate, $NH_2$, NHR, OH groups.

12. Method of preparing bitumen emulsions from polymer-modified bitumens according to Claims 9 to 11, characterized in that emulsions containing a proportion of polymer-modified bitumen ranging from 40 to 80 parts by weight are produced.

13. Use of the polymer-modified bitumens in road building and civil engineering and also as material for roof seals.

**Revendications**

1. Bitumes modifiés aux polymères, qui contiennent de 0,5 à 10 parties en poids de polyoctèneamère pour 100 parties en poids de bitume et le cas échéant un agent réticulant.

2. Bitumes modifiés aux polymères selon la revendication 1, caractérisés en ce que le polyoctèneamère est essentiellement un trans-polyoctèneamère et qu'il contient des groupes carboxyles ainsi que les groupes qui en dérivent.

3. Bitumes modifiés aux polymères selon les revendications 1 et 2, caractérisés en ce qu'on réalise la mise en fonction par l'un ou plusieurs des composés suivants et de leurs dérivés : acide acrylique, acide asparagique, acide citracanique, acide crotonique, acide fumarique, acide itaconique, acide maléique, acide méthacrylique, acides norbornènedicarboxyliques.

4. Bitumes modifiés aux polymères, selon les revendications 1 à 3, caractérisés en ce que les groupes fonctionnels proviennent de l'anhydride d'acide maléique.

5. Bitumes modifiés aux polymères selon les revendications 1 à 3, caractérisés en ce que les groupes fonctionnels proviennent des esters dialkyliques de l'acide fumarique avec 1 à 4 atomes de carbone dans la chaîne alkyle.

6. Bitumes modifiés aux polymères selon la revendication 1, caractérisés en ce que le polyoctèneamère fonctionnalisé est un trans-polyoctèneamère et contient des groupes époxy.

7. Bitumes modifiés aux polymères selon les revendications 1 à 6, caractérisés en ce qu'ils contiennent en plus 0,1 - 10 parties en poids d'un autre caoutchouc par rapport à 100 parties en poids de bitume.

8. Bitumes modifiés aux polymères selon les revendications 1 à 7 caractérisés en ce que les composés bi ou poly fonctionnels utilisés à la réticulation contiennent des groupes époxy, isocyanate, $NH_2$, NHR, OH.

9. Procédé de préparation de bitumes modifiés aux polymères selon les revendications 1 à 8, caractérisé en ce qu'on mélange à 100 parties en poids de bitume, 0,5 à 10 parties en poids de polyoctèneamère mises en fonction.

10. Procédé de préparation de bitumes modifiés aux polymères selon la revendication 9, caractérisé en ce qu'on les réticule le cas échéant après addition d'autres élastomères, thermoplastiques, charges, plastifiants, stabilisants et additifs de transformation avec 0,05 à 1 mole de groupes fonctionnels d'un composé réactif au moins bifonctionnel, rapporté chaque fois à 1 mole des groupes réactifs dans le polyoctèneamère mis en fonction.

11. Procédé de préparation de bitumes modifiés aux polymères selon les revendications 9 et 10, caractérisé en ce que les composés bi ou poly fonctionnels utilisés pour la réticulation contiennent des groupes époxy, isocyanate, $NH_2$-, NHR-, OH.

12. Procédé de préparation d'émulsions de bitumes à partir de bitumes modifiés aux polymères selon les revendications 9 à 11, caractérisé en ce qu'on produit des émulsions, avec une teneur en bitumes modifiés aux polymères de 40 à 80 parties en poids.

13. Utilisation des bitumes modifiés aux polymères pour la construction routière et souterraine, ainsi que comme matériau d'étanchéité de toitures.